# EUROPÄISCHE PATENTSCHRIFT

(11) **EP 3 117 303 B1**
(45) Veröffentlichungstag und Bekanntmachung des Hinweises auf die Patenterteilung: **04.10.2023**
(21) Anmeldenummer: 14728112.5
(22) Anmeldetag: 19.05.2014
(51) Int. Cl.: G06F 9/451

(54) **CONTAINER MIT EINHEITLICHEM LOOK AND FEEL MEHRERER APPLIKATIONEN**
CONTAINER HAVING A UNIFORM LOOK AND FEEL FOR A PLURALITY OF APPLICATIONS
CONTENEUR PRÉSENTANT UN ASPECT UNIFORME DE PLUSIEURS APPLICATIONS

(43) Veröffentlichungstag der Anmeldung: 18.01.2017
(73) Patentinhaber: Siemens Healthcare GmbH, 91052 Erlangen (DE)
(72) Erfinder: CHARRAD, Chiheb, 91077 Neunkirchen A. Brand (DE); DOMINICK, Lutz, 91330 Eggolsheim (DE); MURPHY, Ivan, 91083 Baiersdorf (DE)
(86) Internationale Anmeldenummer: PCT/EP2014/060262
(87) Internationale Veröffentlichungsnummer: WO 2015/176741

(56) Entgegenhaltungen:
- WO-A1-03/036495
- WO-A2-2009/034504
- US-A1- 2008 077 945
- US-A1- 2013 067 600
- US-A1- 2013 260 730
- US-B1- 6 747 480

## Beschreibung

Die vorliegende Erfindung betrifft ein Betriebsverfahren für einen Rechner.

Die vorliegende Erfindung betrifft weiterhin einen Container, der Maschinencode umfasst, der von einem Rechner abarbeitbar ist, wobei die Abarbeitung des Maschinencodes durch den Rechner bewirkt, dass der Rechner ein derartiges Betriebsverfahren ausführt.

Die vorliegende Erfindung betrifft weiterhin einen Rechner, der mit einem Betriebssystem und einem derartigen Container programmiert ist, so dass der Rechner bei Aufruf des Containers ein derartiges Betriebsverfahren ausführt.

Bei vielen Anwendungsgebieten ist es erforderlich, eine Vielzahl von komplexen Applikationen auszuführen, welche oftmals einen hohen Qualitätsstandard aufweisen und deren Entwicklung oftmals Mannjahre benötigt. Beispiele derartiger Applikationen sind medizinische Applikationen zur Auswertung von Bildern, die mittels bildgebender medizintechnischer Modalitäten erfasst wurden.

Bei der Entwicklung einer jeweiligen Applikation wird eine Benutzerschnittstelle implementiert. Die Benutzerschnittstelle wird in der Regel in dem Standard implementiert, welche zum Zeitpunkt der Entwicklung der Applikation gerade aktuell ist. Nach der Auslieferung der jeweiligen Applikation an den Kunden muss die Applikationen über viele Jahre hinweg erhalten bleiben, damit sich der Kostenaufwand des Kunden amortisieren kann.

Über den gesamten Lebenszyklus der jeweiligen Applikation gesehen, erfolgen oftmals viele Aktualisierungen einer bestimmten Technologie. Weiterhin erfolgt in diesem Zeitraum oftmals die Entwicklung einer neuen Technologie. Es besteht daher oftmals die Notwendigkeit, verschiedene Entwicklungsstände verschiedener Technologien in einer nahtlosen Weise miteinander zu integrieren, beispielsweise die Benutzerschnittstelle und in der Applikation das darunter liegende Komponentenmodell. Das Erfordernis, Technologien zu integrieren, unterstützt das Bestreben, Applikationen zu vermeiden, die nicht mehr dem aktuellen Stand der Technik entsprechen und daher nicht mehr wettbewerbsfähig sind.

In den letzten Jahren und Jahrzehnten sind beispielsweise Benutzerschnittstellen und deren zugehörigen Technologien wie WIN32, MFC, Windows Forms, WPF, Silverlight, HTML 5 usw. aufgekommen. Die Weiterentwicklung setzt sich auch heute und in Zukunft noch fort.

Immer dann, wenn neue Eigenschaften in existierenden Applikationen mit neuen Technologien implementiert werden, werden durch die zwischen den Technologien bestehenden Unterschiede Widersprüche und Konflikte geschaffen, welche gelöst werden müssen, ohne gefährliche oder riskante Nebeneffekte zu bewirken. Dies muss mit vernünftigen Kosten realisiert werden, und zwar oftmals während der Lebenszeit der Applikation mehrmals.

Die Integration einer neuen Technologie ist üblicherweise bereits eine Herausforderung. Die oben genannten Randbedingungen und Beschränkungen vervielfachen diese Herausforderung. Aufgrund dieses Umstands wird die Integration neuer Technologien in bereits bestehende Applikationen üblicherweise vermieden.

Wenn in einer Applikation eine Mischung verschiedener Technologien vorgenommen wird, ist es eine große technische Herausforderung, diese Technologien konfliktfrei zum Ablauf zu bringen. Selbst wenn dies gelingt, führt dies oftmals für den Anwender zu einem intuitiv inkonsistenten Verhalten der Applikation. Weiterhin führt dies oftmals zu einer verringerten Leistung der Applikation, weil sie in erhöhtem Umfang Ressourcen benötigt. Beide Sachverhalte führen zu einer verringerten Benutzerakzeptanz. Wenn im Rahmen einer sinnvollen Nutzung von Applikationen mehrere Applikationen benötigt werden, tritt oftmals ganz von selbst die Situation auf, dass die eine Applikation eine Benutzerschnittstelle gemäß einer ersten Technologie und die andere Applikation eine Benutzerschnittstelle gemäß einer zweiten Technologie verwendet, so dass das look and feel von Applikation zu Applikation verschieden ist.

Im Stand der Technik werden verschiedene Maßnahmen ergriffen, um diesen Konflikten gerecht zu werden.

Ein Ansatz besteht darin, beim Aufkommen einer neuen Technologie eine vollständig neue Applikation zu entwickeln. Diese Vorgehensweise stellt einen erheblichen Zeit- und Kostenaufwand dar.

Ein weiterer Ansatz besteht darin, neue Eigenschaften einer neuen Technologie vorzutäuschen, sie in Wirklichkeit jedoch basierend auf einer alten Technologie zu realisieren.

Ein weiterer Ansatz ist der eher kaufmännische Ansatz, mittels einer geeigneten Marketingstrategie die alten Applikationen in der alten Technologie am Markt nach und nach durch neue Applikationen in einer neuen Technologie zu ersetzen. Diese Vorgehensweise führt in der Praxis am Markt zu einem langen Zeitraum, während dessen beide Technologien koexistieren und - je nachdem, ob die alte oder die neue Applikation verwendet wird - ein entsprechend unterschiedliches look and feel hervorgerufen wird.

Einzelne Technologien stellen Hilfsmittel zur Verfügung, mittels derer es möglich ist, ausgewählte Aspekte einer Technologie in eine andere Technologie zu integrieren. Hierbei ist jedoch nur die Integration einzelner Lagen wie beispielsweise der Benutzerschnittstelle möglich. Auch muss der Entwickler der Applikation nach wie vor für das korrekte Verhalten der gemischten Technologie Sorge tragen, beispielsweise bezüglich der Handhabung von internen Ereignissen und Updates der Benutzerschnittstelle. Ein Beispiel für eine derartige Integration ist die Integration von Windows Forms Controls in WPF-Applikationen und umgekehrt unter Verwendung von sogenannten ElementHost helper classes. In einem derartigen Fall ist die Steuerung gemäß WPF in ein Host-Objekt eingebettet. Die Integration ist jedoch nicht vollständig. Es wird lediglich ein Startpunkt geboten.

Ein wiederum anderer Ansatz besteht darin, eine Vielzahl von Hosting-Mechanismen zur Verfügung zu stellen, welche es ermöglichen, bei einer Applikation, die mit einer bestimmten Technologie realisiert wurde, zur Laufzeit eine bestimmte andere Technologie zu laden und anzuzeigen. In einem derartigen Fall findet jedoch keine Integration statt. Beispiele sind das Microsoft Composite UI Applikation Block für WinForms-Applikationen und PRISM für WPF-Applikationen. In ähnlicher Weise basieren Addins für den Firefox Web-Browser auf einem proprietären XML-Dialekt und JavaScripting-Code.

Außer der Benutzerschnittstelle gibt es weiterhin vorbestimmte Raster und Schemata, um Code und Dateneinheiten einzubetten. Diese Maßnahme dient dem Zweck, nur schwache Abhängigkeiten zwischen Komponenten, die in verschiedenen Technologien geschrieben wurden, entstehen zu lassen. Beispielsweise bietet das NET-Framework ein Frameworks Managed Extensibility Framework (MEF) und ein Managed Add-in Framework (MAF).

Aus der US 2008/0077 945 ist ein display organizer bekannt. Der display organizer kann mit einer Anzahl ungleicher Anwendungen zusammenarbeiten. Er umfasst unter anderem einen Parser, der Eingaben, die von einem Benutzer entgegengenommen werden, in Anweisungen für die verschiedenen Applikationen umsetzt. Auch die inverse Vorgehensweise, also das Ausgeben von Daten an den Benutzer, ist in der US 2008/0 077 945 A1 erwähnt.

Aus der US 2013/0 260 730 A1 ist ein Betriebsverfahren für ein mobiles Gerät wie beispielsweise einen PDA, ein Smartphone oder dergleichen bekannt, wobei das Gerät unter Kontrolle und Steuerung durch ein Betriebssystem einen Container ausführt, der seinerseits wiederum als ablauffähige Umgebung für eine Anzahl von Applikationen dient. Der Container dient als Schnittstelle zwischen den Applikationen einerseits und dem Betriebssystem andererseits.

Aus der WO 03/036 495 A1 ist ein Betriebsverfahren für einen Rechner bekannt, wobei der Rechner unter Kontrolle und Steuerung durch ein Betriebssystem einen Container ausführt, der seinerseits wiederum als ablauffähige Umgebung für eine Anzahl von Applikationen dient. Der Container dient als Schnittstelle zwischen den Applikationen einerseits und dem Betriebssystem andererseits.

Die Aufgabe der vorliegenden Erfindung besteht darin, Möglichkeiten zu schaffen, mittels derer auf einfache und zuverlässige Weise eine Benutzerschnittstelle einer Applikation an geänderte Bedürfnisse angepasst werden kann, ohne die eigentliche Nutzfunktion der Applikation zu ändern und ohne die Applikation selbst ändern zu müssen.

Die Aufgabe wird durch ein Betriebsverfahren für einen Rechner mit den Merkmalen des Anspruchs 1 gelöst. Vorteilhafte Ausgestaltungen des Betriebsverfahrens sind Gegenstand der abhängigen Ansprüche 2 bis 7.

Erfindungsgemäß wird ein Betriebsverfahren für einen Rechner geschaffen,
a) wobei der Rechner unter Kontrolle und Steuerung durch ein Betriebssystem einen Container ausführt,
b) wobei der Rechner unter Kontrolle und Steuerung durch den Container eine Anzahl von Applikationen ausführt,
c) wobei der Rechner im Rahmen der Abarbeitung des Betriebssystems von einem Anwender Eingaben entgegennimmt, die für eine jeweilige der Applikationen bestimmt sind, und an den Anwender Ausgaben ausgibt, die von einer jeweiligen der Applikationen herrühren,
d) wobei der Rechner im Rahmen der Abarbeitung des Betriebssystems die für jeweilige Applikation bestimmte jeweilige Eingabe zunächst an den Container weitergibt,
e) wobei der Rechner im Rahmen der Abarbeitung des Containers prüft, ob die jeweilige Eingabe eine Nutzeingabe für die jeweilige Applikation oder eine Steuereingabe für die jeweilige Applikation ist,
f) wobei der Rechner in dem Fall, dass es sich bei der jeweiligen Eingabe um eine Nutzeingabe für die jeweilige Applikation handelt, die jeweilige Eingabe im Rahmen der Abarbeitung des Containers an die jeweilige Applikation weitergibt,
g) wobei der Rechner in dem Fall, dass es sich bei der jeweiligen Eingabe um eine Steuereingabe für die jeweilige Applikation handelt, anhand der vom Betriebssystem entgegengenommenen Steuereingabe eine an die jeweilige Applikation weiterzugebende Steuereingabe ermittelt und diese Steuereingabe an die jeweilige Applikation weitergibt,
h) wobei der Rechner im Rahmen der Abarbeitung des Containers prüft, ob eine jeweilige Ausgabe einer jeweiligen Applikation eine Nutzausgabe oder eine Steuerausgabe der jeweiligen Applikation ist,
i) wobei der Rechner in dem Fall, dass es sich bei der jeweiligen Ausgabe um eine Nutzausgabe der jeweiligen Applikation handelt, die jeweilige Ausgabe im Rahmen der Abarbeitung des Containers an das Betriebssystem weitergibt,
j) wobei der Rechner in dem Fall, dass es sich bei der jeweiligen Ausgabe um eine Steuerausgabe der jeweiligen Applikation handelt, anhand der von der jeweiligen Applikation entgegengenommenen Steuerausgabe eine an das Betriebssystem weiterzugebende Steuerausgabe ermittelt und diese Steuerausgabe an das Betriebssystem weitergibt,
k) wobei der Rechner spätestens beim Aufrufen und Laden einer zuerst geladenen Applikation in den Container eine erste Liste lädt, welche die vom Betriebssystem an den Container auszugebenden Steuereingaben und deren jeweils zugeordnete Funktionalität und die vom Container an das Betriebssystem auszugebenden Steuerausgaben und deren jeweils zugeordnete Funktionalität enthält,
l) wobei der Rechner spätestens beim Aufruf einer jeweiligen Applikation aus dem Container heraus in den Container eine zweite Liste lädt, welche die vom Container an die jeweilige Applikation weiterzugebenden Steuereingaben und deren jeweils zugeordnete Funktionalität und die von der jeweiligen Applikation an den Container auszugebenden Steuerausgaben und deren jeweils zugeordnete Funktionalität enthält,
m) wobei der Rechner anhand der Funktionalitäten der ersten und der zweiten Liste eine weitere Liste oder Tabelle ermittelt, in der enthalten ist, welche der vom Betriebssystem an den Container auszugebenden Steuereingaben mit welchen vom Container an die jeweilige Applikation weiterzugebenden Steuereingaben korrespondieren und welche der von der jeweiligen Applikation an den Container auszugebenden Steuerausgaben mit welchen vom Container an das Betriebssystem weiterzugebenden Steuerausgaben korrespondieren, und
n) wobei der Rechner zum Ermitteln einer an die jeweilige Applikation weiterzugebenden Steuereingabe und zum Ermitteln einer an das Betriebssystem weiterzugebenden Steuerausgabe auf die weitere Liste oder Tabelle zugreift.

Dadurch kann in dem Fall, dass die Benutzerschnittstelle angepasst werden soll, die Applikation als solche unverändert bleiben. Lediglich der Container, der nur eine ablauffähige Umgebung für die Applikation zur Verfügung stellt, muss angepasst werden. Dadurch kann weiterhin die "Übersetzungstabelle", mittels derer die Umsetzung von einer vom Betriebsystem entgegengenommenen Steuereingabe in eine an die jeweilige Applikation weiterzugebende Steuereingabe und die Umsetzung von einer von der jeweiligen Applikation entgegengenommenen Steuerausgabe in eine an das Betriebssystem weiterzugebende Steuerausgabe erfolgt, vom Rechner selbsttätig ermittelt werden.

Ausgangspunkt der vorliegenden Erfindung ist also ein generischer, vorzugsweise anwendungsunabhängiger Container, der für die Applikationen angepasste Mechanismen zur Verfügung stellt, um einen Satz von Technologien zu verwalten und in-einander zu integrieren. Dadurch wird insbesondere eine Zusammenarbeit verschiedener Technologien ermöglicht und ein nahtloses look and feel ermöglicht. Die Technologie, in welcher der Container selbst realisiert ist, ist frei wählbar.

Die Anzahl an Applikationen kann beliebig sein. Minimal beträgt sie eins. Ihre volle Stärke zeigt die vorliegende Erfindung jedoch, wenn die Anzahl an Applikationen größer als eins ist.

Es ist möglich, dass die Applikationen untereinander auf der gleichen Technologie basieren. Dies ist jedoch nicht erforderlich. Dennoch kann ein einheitliches look and feel geschaffen werden. Hierzu ist es lediglich erforderlich,
a) dass der Rechner in dem Fall, dass es sich bei der jeweiligen Eingabe um eine vom Betriebssystem entgegengenommene Steuereingabe handelt, im Rahmen der Abarbeitung des Containers individuell für die jeweilige Applikation, für welche die jeweilige Eingabe bestimmt ist, die an die jeweilige Applikation weiterzugebende Steuereingabe ermittelt und
b) dass der Rechner in dem Fall, dass es sich bei der jeweiligen Ausgabe um eine von der jeweiligen Applikation entgegengenommene Steuerausgabe handelt, im Rahmen der Abarbeitung des Containers individuell für die jeweilige Applikation, von der die jeweilige Ausgabe stammt, die an das Betriebssystem weiterzugebende Steuerausgabe ermittelt.

Die Unterscheidung zwischen Nutzeingaben und Steuereingaben sowie Nutzausgaben und Steuerausgaben kann im Einzelfall unterschiedlich gewählt werden. In der Regel kann als Unterscheidungskriterium jedoch mindestens eines der nachstehenden Kriterien herangezogen werden:
a) die für die Applikationen bestimmten Nutzeingaben umfassen vom Anwender vorgegebene Informationen, die bei der Eingabe direkt in einem der jeweiligen Applikation zugeordneten Fenster dargestellt werden und/oder bei einem Beenden oder Verlassen der jeweiligen Applikation in einem der jeweiligen Applikation zugeordneten Datensatz speicherbar sind, und/oder vom Anwender vorgegebene Daten zur Auswahl von von der jeweiligen Applikation zu bearbeitenden Daten und/ oder alphanumerische Zeichen,
b) die für die Applikationen bestimmten Steuereingaben umfassen Befehle zum Bewegen und Positionieren eines Cursors und/oder eines Mauszeigers auf einem Bildschirm und/oder Befehle zum Anzeigen von Schaltflächen und/oder Befehle zum Selektieren von auf dem Bildschirm dargestellten Schaltflächen und/oder Betätigungen von Softkeys und/oder Betätigungen von Controlkeys,
c) die Nutzausgaben der Applikationen umfassen die Wiedergabe von vom Anwender vorgegebenen Informationen und/oder von daraus abgeleiteten Informationen und
d) die Steuerausgaben der Applikationen umfassen das Layout von Darstellungen von Menüs und/oder Schaltflächen und/ oder eine Farbgebung von Fenstern der Applikation.

Vom Anwender vorgegebene Informationen, die bei der Eingabe direkt in einem der jeweiligen Applikation zugeordneten Fenster dargestellt werden, sind beispielsweise Texte oder Linien, die der Applikation vom Anwender vorgegeben werden und die im Rahmen der Applikation verwertet werden. Ein einfaches Beispiel ist der Text und seine Formatierung in einem Word-Dokument. Ein anderes Beispiel sind die Daten in einem Excel-Dokument. Ein weiteres Beispiel ist ein Such-String, der vom Anwender in ein Suchfeld eingegeben wird.

Mit Ausnahme des Such-Strings erfüllen die oben genannten Informationen auch das Kriterium, dass sie bei einem Beenden oder Verlassen der jeweiligen Applikation in einem der jeweiligen Applikation zugeordneten Datensatz speicherbar sind.

Vom Anwender vorgegebene Daten zur Auswahl von von der jeweiligen Applikation zu bearbeitenden Daten ist beispielsweise ein Dateipfad, über den Daten in die Applikation geladen werden oder über den aus der Applikation heraus Daten in einer Datei gespeichert werden.

Alphanumerische Zeichen bedürfen keiner näheren Erläuterung.

Befehle zum Bewegen und Positionieren eines Cursors auf einem Bildschirm sind beispielsweise die direkte Betätigung von Cursortasten oder von Tastenkombinationen wie beispielsweise der Steuerungstaste in Verbindung mit der Tabulatortaste.

Befehle zum Bewegen und Positionieren eines Mauszeigers auf einem Bildschirm werden üblicherweise durch direkte Betätigung einer Computermaus oder dergleichen eingegeben.

Befehle zum Anzeigen von Schaltflächen können beispielsweise ein Klicken mit einer rechten Maustaste oder ein Anwählen eines bereits angezeigten Menüpunkts durch Klicken mit einer linken Maustaste sein.

Befehle zum Selektieren von auf dem Bildschirm dargestellten Schaltflächen können beispielsweise durch Tastaturbefehle (insbesondere Betätigen der Enter-Taste) oder durch Mausklicks vorgegeben werden.

Betätigungen von Softkeys und/oder Betätigungen von Controlkeys bedürfen keiner näheren Erläuterung.

Die Wiedergabe von vom Anwender vorgegebenen Informationen bedarf keiner näheren Erläuterung.

Die Wiedergabe von Informationen, die von vom Anwender vorgegebenen Informationen abgeleitet werden, sind beispielsweise die Ergebnisse einer Auswertung wie beispielsweise eine 3D-Rekonstruktion anhand einer Vielzahl von vorgegebenen 2D-Bildern.

Das Layout von Darstellungen von Menüs betrifft beispielsweise deren strukturellen Aufbau einschließlich der Anordnung von Schaltflächen, Masken und dergleichen mehr. Das Layout von Schaltflächen betrifft beispielsweise deren Größe und deren Größenverhältnisse, eine Darstellung mit oder ohne Umrahmung und dergleichen mehr. Die Farbgebung von Fenstern der Applikation betrifft insbesondere die Farbgebung als solche und auch deren Änderung, beispielsweise wenn ein Mauszeiger über einem Element des Fensters positioniert wird und/oder dort betätigt wird oder das jeweilige Fenster aktiviert oder deaktiviert wird.

Es ist weiterhin möglich, dass die Einstufung von bestimmten Nutzeraktionen nicht statisch ist, sondern dynamisch vorgenommen wird, d.h. vom Zustand der Applikation abhängig ist.

Ein einfaches, an sich bekanntes Beispiel ist das Betätigen der Tabulatortaste in Word: Wird die Tabulatortaste in einem normalen Text betätigt, wird schlichtweg ein Tabulator gesetzt. Wird die Tabulatortaste am Zeilenanfang betätigt, kann mit dem Betätigen der Tabulatortaste zugleich auch der linke Einzug festgelegt werden. Wird die Tabulatortaste in einer Tabelle betätigt, wird zum nächsten Feld der Tabelle gesprungen.

Es ist möglich, dass der Container für jede Applikation eine eigene zweite Liste enthält. Vorzugsweise jedoch ist die zweite Liste einheitlich für mehrere Applikationen eines jeweiligen Applikationstyps definiert. In diesem Fall teilt die Applikation dem Container ihren Applikationstyp mit.

Vorzugsweise wird der Container transparent ausgeführt. Der Anwender "sieht" den Container also gar nicht. Der Anwender "sieht" vielmehr vorzugsweise nur die Applikationen. Der Container wirkt also im Hintergrund.

Es ist möglich, dass der Container eine eigenständige Applikation ist, sozusagen eine Masterapplikation. Vorzugsweise jedoch ist der Container unabhängig von den Applikationen lauffähig, enthält also keine eigene Applikation. Er stellt lediglich die lauffähige Umgebung für die Applikationen zur Verfügung.

Die Aufgabe wird weiterhin durch einen Container mit den Merkmalen des Anspruchs 8 gelöst. Eine vorteilhafte Ausgestaltung des Containers ist Gegenstand des abhängigen Anspruchs 9. Erfindungsgemäß bewirkt die Abarbeitung des Maschinencodes durch den Rechner, dass der Rechner ein erfindungsgemäßes Betriebsverfahren ausführt.

Die Aufgabe wird weiterhin durch einen Rechner mit den Merkmalen des Anspruchs 10 gelöst. Eine vorteilhafte Ausgestaltung des Rechners ist Gegenstand des abhängigen Anspruchs 11. Erfindungsgemäß ist der Rechner - zusätzlich zur Programmierung mit dem Betriebssystem - mit einem erfindungsgemäßen Container programmiert, so dass der Rechner bei Aufruf des Containers ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Rechner,
- FIG 2: ein Betriebssystem, einen Container und Applikationen,
- FIG 3: Kommunikationen des Containers mit dem Betriebssystem und den Applikationen,
- FIG 4: ein Ablaufdiagramm,
- FIG 5: eine Liste oder Tabelle,
- FIG 6: ein weiteres Ablaufdiagramm,
- FIG 7: ein weiteres Ablaufdiagramm,
- FIG 8: mehrere Listen und
- FIG 9: ein weiteres Ablaufdiagramm.

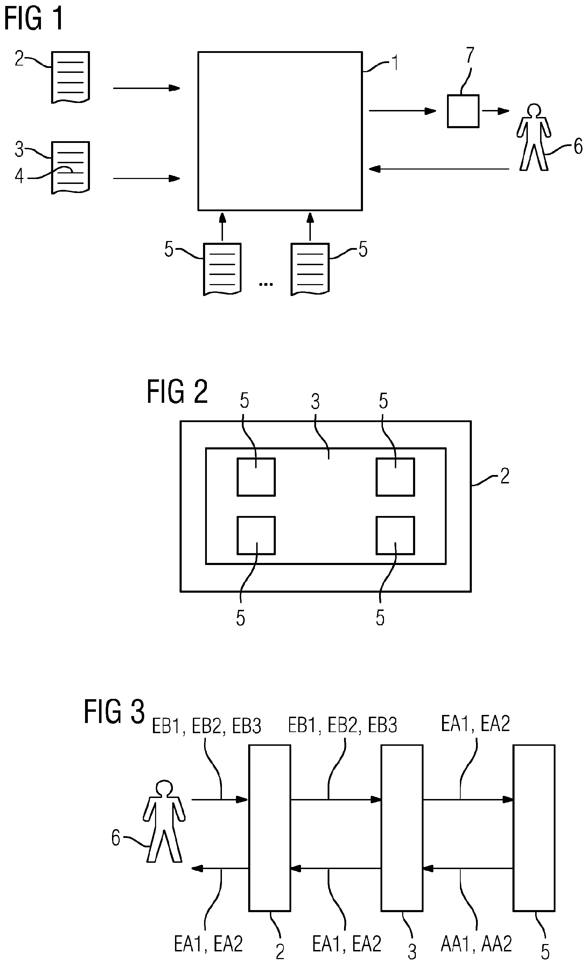

Gemäß FIG 1 ist ein Rechner 1 mit einem Betriebssystem 2 programmiert. Unter übergeordneter Kontrolle und Steuerung durch das Betriebssystem 2 führt der Rechner 1 seine Aufgaben aus.

Der Rechner 1 ist gemäß FIG 1 weiterhin mit einem Container 3 programmiert. Der Container 3 wird vom Rechner 1 - siehe insbesondere FIG 2 - unter Kontrolle und Steuerung durch das Betriebssystem 2 ausgeführt. Der Container 3 umfasst Maschinencode 4, der von dem Rechner 1 abarbeitbar ist. Die Abarbeitung des Maschinencodes 4 bewirkt insbesondere, dass der Rechner 1 ein Betriebsverfahren ausführt, wie es nachfolgend näher erläutert wird.

Der Rechner 1 führt unter Kontrolle und Steuerung durch den Container 3 eine Anzahl von Applikationen 5 aus. Der Container 3 ist jedoch unabhängig von den Applikationen 5 lauffähig. Die Anzahl an Applikationen 5 ist prinzipiell beliebig. Minimal führt der Container 3 eine einzige Applikation 5 aus. In der Regel ist die Anzahl an Applikationen 5 jedoch entsprechend der Darstellung in den FIG 1 und 2 größer als eins. Die in FIG 2 dargestellte Anzahl von vier Applikationen 5 ist jedoch rein beispielhaft.

Es ist möglich, dass der Container 3 als solches von einem Anwender 6 (siehe FIG 1) als Container 3 erkennbar ist. Vorzugsweise jedoch wird der Container 3 vom Rechner 1 transparent ausgeführt. Der Anwender 6 bemerkt den Container 3 also gar nicht.

Gemäß FIG 3 nimmt der Rechner 1 im Rahmen der Abarbeitung des Betriebssystems 2 vom Anwender 6 Eingaben EB1, EB2, EB3 entgegen. Die Eingaben EB1 und EB2 sind für eine jeweilige der Applikationen 5 bestimmt. Die Eingaben EB3 sind für den Container 3 als solchen bestimmt. Der Rechner 1 gibt gemäß FIG 3 im Rahmen der Abarbeitung des Betriebssystems 2 nicht nur die für den Container 3 selbst bestimmten Eingaben EB3, sondern auch die für jeweilige Applikation 5 bestimmten jeweiligen Eingaben EB1, EB2 zunächst an den Container 3 weiter. Der Container 3 gibt sodann gemäß FIG 3 an die jeweilige Applikation 5 eine Eingabe EA1, EA2 weiter. Die an die jeweilige Applikation 5 weitergegebene Eingabe EA1, EA2 basiert auf der vom Betriebssystem 2 an den Container 3 übermittelten Eingabe EB1, EB2.

Gemäß FIG 3 nimmt der Rechner 1 weiterhin im Rahmen der Abarbeitung der Applikationen 5 vom Anwender 6 Ausgaben AA1, AA2 entgegennimmt, die an den Anwender 6 ausgegeben werden sollen. Der Rechner 1 gibt gemäß FIG 3 im Rahmen der Abarbeitung der jeweiligen Applikation 5 die für den Anwender 6 bestimmte jeweilige Ausgabe AA1, AA2 zunächst an den Container 3 weiter. Der Container 3 gibt sodann gemäß FIG 3 an das Betriebssystem 2 eine Ausgabe AB1, AB2 weiter. Die an das Betriebssystem 2 weitergegebene Ausgabe AB1, AB2 basiert auf der von der jeweiligen Applikation 5 an den Container 3 übermittelten Ausgabe AA1, AA2. Das Betriebssystem 2 gibt die Ausgabe AB1, AB2 über eine Ausgabeeinrichtung 7 an den Anwender 6 aus. Die Ausgabeeinrichtung 7 umfasst in der Regel ein Sichtgerät wie beispielsweise einen Monitor. Die Ausgabeeinrichtung 7 kann zusätzlich einen Lautsprecher mit umfassen.

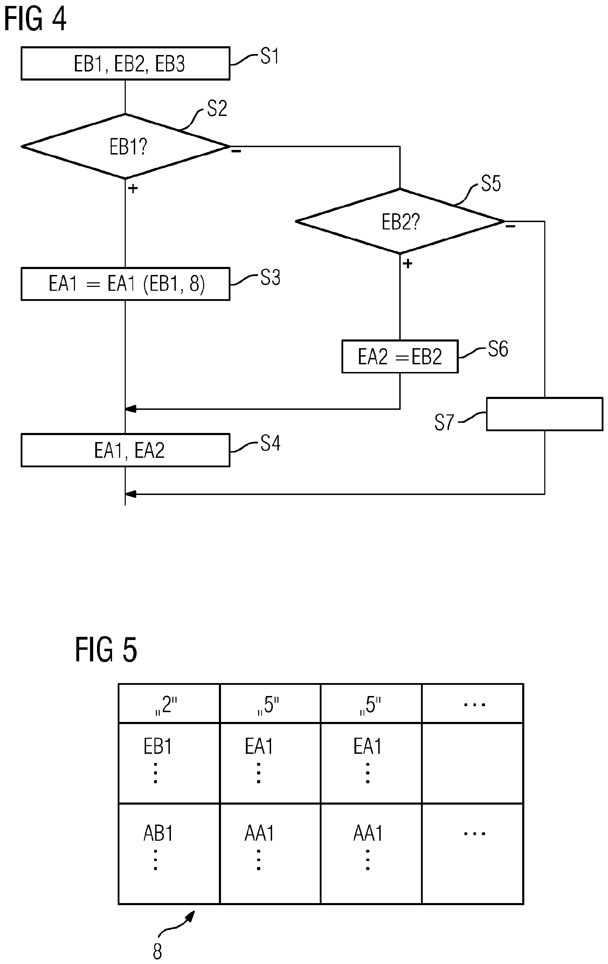

Die vorliegende Erfindung betrifft im Wesentlichen die Wirkungsweise des Containers 3, also die vom Rechner 1 im Rahmen der Abarbeitung des Containers 3 ergriffenen Maßnahmen. Diese werden nachfolgend in Verbindung mit den weiteren FIG, insbesondere mit den FIG 4 bis 6, näher erläutert.

Im Falle einer Eingabe EB1, EB2, EB3 nimmt der Container 3 gemäß FIG 4 zunächst in einem Schritt S1 die entsprechende Eingabe EB1, EB2, EB3 entgegen. Sodann prüft der Rechner 1 gemäß FIG 4 in einem Schritt S2, ob die jeweilige Eingabe EB1, EB2, EB3 eine Steuereingabe EB1 für die jeweilige Applikation 5 ist. Wenn dies der Fall ist, geht der Rechner 1 zu einem Schritt S3 über. Im Schritt S3 ermittelt der Rechner 1 anhand der vom Betriebssystem 2 entgegengenommenen Steuereingabe EB1 die an die Applikation 5 weiterzugebende EA1. Auch die Eingabe EA1 ist eine Steuereingabe für die jeweilige Applikation 5. Zum Ermitteln der an die jeweilige Applikation 5 zu übermittelnden Steuereingabe EA1 greift der Rechner 1 im Rahmen der Abarbeitung des Containers 3 auf eine Liste oder Tabelle 8 (siehe FIG 5) zu. Die Liste oder Tabelle 8 enthält gemäß FIG 5 einerseits die möglichen vom Betriebssystem 2 an den Container 3 übermittelten Steuereingaben EB1 und andererseits für die Applikationen 5 die jeweilige an die jeweilige Applikation 5 weiterzugebende korrespondierende Steuereingabe EA1. Nach dem Ermitteln der korrespondierenden Steuereingabe EA1 geht der Rechner 1 zu einem Schritt S4 über, in dem der Rechner 1 die entsprechende Eingabe EA1, EA2 - im vorliegenden Fall die Steuereingabe EA1 - an die jeweilige Applikation 5 weitergibt.

Aus der Liste oder Tabelle 8 ist ersichtlich, dass für eine bestimmte vom Betriebssystem 2 entgegengenommene Steuereingabe EB1 innerhalb des Containers 3 für jede Applikation 5 jeweils eine eigene Zuordnung einer jeweiligen Steuereingabe EA1 aufgelistet ist. Der Rechner 1 ermittelt daher im Rahmen der Abarbeitung des Containers 3 individuell für die jeweilige Applikation 5, für welche die jeweilige Eingabe bestimmt ist, die an die jeweilige Applikation 5 weiterzugebende Steuereingabe EA1.

Es ist im Einzelfall möglich, dass die an die jeweilige Applikation 5 weiterzugebende Steuereingabe EA1, die im Rahmen des Schrittes S3 ermittelt wird, mit der vom Betriebssystem 2 entgegengenommenen Steuereingabe EB1 identisch ist. Diese Übereinstimmung ist zwar möglich, sie ist jedoch, falls sie auftritt, rein zufällig. Denn sie tritt nur dann auf, wenn - rein zufällig - die einander zugeordneten Einträge in der Liste oder Tabelle 8 für die vom Betriebssystem 2 entgegengenommene Steuereingabe EB1 und die an die jeweilige Applikation 5 weiterzugebende Steuereingabe EA1 übereinstimmen. Hingegen wird nicht prinzipbedingt die vom Betriebssystem 2 entgegengenommene Steuereingabe EB1 unverändert als an die jeweilige Applikation 5 weiterzugebende Steuereingabe EA1 übernommen.

Wenn die jeweilige Eingabe EB1, EB2, EB3 keine Steuereingabe EB1 der jeweiligen Applikation 5 ist, geht der Rechner 1 zu einem Schritt S5 über. Im Schritt S5 prüft der Rechner 1, ob die jeweilige Eingabe EB1, EB2, EB3 eine Nutzeingabe EB2 für die jeweilige Applikation 5 ist. Wenn dies der Fall ist, geht der Rechner 1 zu einem Schritt S6 über. Im Schritt S6 übernimmt der Rechner 1 die vom Betriebssystem 2 entgegengenommene Nutzeingabe EB2 1:1 als an die Applikation 5 weiterzugebende Eingabe EA2. Auch die Eingabe EA2 ist eine Nutzeingabe für die jeweilige Applikation 5. Sodann geht der Rechner 1 zum Schritt S4 über, in dem der Rechner 1 die entsprechende Eingabe EA1, EA2 - im vorliegenden Fall die Nutzeingabe EA2 - an die jeweilige Applikation 5 weitergibt.

Wenn die jeweilige Eingabe EB1, EB2, EB3 auch keine Nutzeingabe EB2 der jeweiligen Applikation 5 ist, geht der Rechner 1 zu einem Schritt S7 über. Im Schritt S7 ergreift der Rechner 1 eine andere Maßnahme. Insbesondere ergreift der Rechner 1 eine Maßnahme in Abhängigkeit von der für den Container 3 selbst bestimmten Eingabe EB3.

Es ist möglich, dass jede Eingabe EB1, EB2, EB3 des Betriebssystems 2 an den Container 3 entweder eine Steuereingabe EB1 oder eine Nutzeingabe EB2 ist. In diesem Fall können die Schritte S5 und S7 entfallen und es kann, ausgehend vom Schritt S2 gegebenenfalls direkt zum Schritt S6 übergegangen werden. Alternativ ist es möglich, dass auch die Eingaben EB3 an den Container 3 selbst auftreten können. In diesem Fall sind die Schritte S5 und S7 vorhanden.

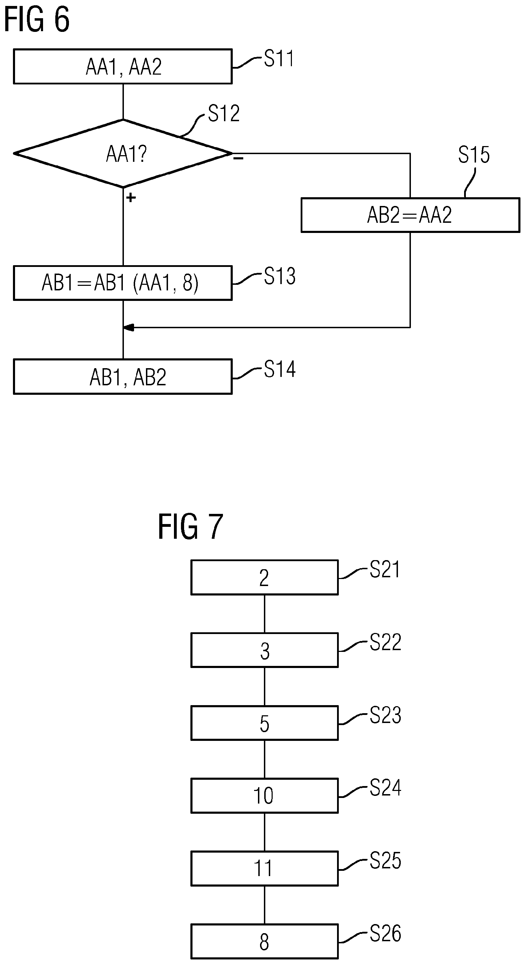

In prinzipiell analoger Weise wird gemäß FIG 6 vorgegangen, wenn eine Ausgabe AA1, AA2 einer jeweiligen Applikation 5 über die Ausgabeeinrichtung 7 an den Anwender 6 ausgegeben werden soll.

Im Falle einer Ausgabe AA1, AA2 nimmt der Container 3 gemäß FIG 6 zunächst in einem Schritt S11 die entsprechende Ausgabe AA1, AA2 entgegen. Sodann prüft der Rechner 1 gemäß FIG 6 in einem Schritt S12, ob die jeweilige Ausgabe AA1, AA2 eine Steuerausgabe AA1 der jeweiligen Applikation 5 ist. Wenn dies der Fall ist, geht der Rechner 1 zu einem Schritt S13 über.

Im Schritt S13 ermittelt der Rechner 1 anhand der von der jeweiligen Applikation 5 entgegengenommenen Steuerausgabe AA1 die an das Betriebssystem 2 weiterzugebende Ausgabe AB1. Auch die Ausgabe AB1 ist eine Steuerausgabe. Zum Ermitteln der an das Betriebssystem 2 zu übermittelnden Steuerausgabe AB1 greift der Rechner 1 im Rahmen der Abarbeitung des Containers 3 ebenfalls auf die Liste oder Tabelle 8 (siehe erneut FIG 5) zu. Die Liste oder Tabelle 8 enthält gemäß FIG 5 - zusätzlich zu den möglichen vom Betriebssystem 2 an den Container 3 übermittelten Steuereingaben EB1 und den korrespondierenden Steuereingaben EA1 für die Applikationen 5 - einerseits die möglichen von den Applikationen 5 an den Container 3 übermittelten Steuerausgaben AA1 und andererseits für das Betriebssystem 2 die jeweilige an das Betriebssystem 2 weiterzugebende korrespondierende Steuerausgabe AB1.

Sodann geht der Rechner 1 zu einem Schritt S14 über, in dem der Rechner 1 die entsprechende Ausgabe AB1, AB2 - im vorliegenden Fall die Steuerausgabe AB1 - an das Betriebssystem 2 weitergibt.

Es ist - analog zur Umsetzung der Steuereingaben EB1 in die Steuereingaben EA1 - im Einzelfall möglich, dass die an das Betriebssystem 2 weiterzugebende Steuerausgabe AB1, die im Rahmen des Schrittes S13 ermittelt wird, mit der von der jeweiligen Applikation 5 entgegengenommenen Steuerausgabe AA1 identisch ist. Diese Übereinstimmung ist zwar möglich, sie ist jedoch, falls sie auftritt, rein zufällig. Denn sie tritt nur dann auf, wenn - rein zufällig - die einander zugeordneten Einträge in der Liste oder Tabelle 8 für die von der jeweiligen Applikation 5 entgegengenommene Steuerausgabe AA1 und die an das Betriebssystem weiterzugebende Steuerausgabe AB1 übereinstimmen. Hingegen wird nicht prinzipbedingt die von der jeweiligen Applikation 5 entgegengenommene Steuerausgabe AA1 unverändert als an das Betriebssystem 2 weiterzugebende Steuerausgabe AB1 übernommen.

Wenn die jeweilige Ausgabe AA1, AA2 keine Steuerausgabe AA1 der jeweiligen Applikation 5 ist, muss es sich bei der Ausgabe AA1, AA2 um eine Nutzausgabe AA2 der jeweiligen Applikation 5 handeln. In diesem Fall geht der Rechner 1 zu einem Schritt S15 über. Im Schritt S15 übernimmt der Rechner 1 die von der jeweiligen Applikation 5 entgegengenommene Nutzausgabe AA2 1:1 als an das Betriebssystem 2 weiterzugebende Ausgabe AB2. Auch die Ausgabe AB2 ist eine Nutzausgabe. Sodann geht der Rechner 1 zum Schritt S14 über, in dem der Rechner 1 die entsprechende Ausgabe AB1, AB2 - im vorliegenden Fall die Nutzausgabe AB2 - an das Betriebssystem 2 weitergibt.

Aus der Liste oder Tabelle 8 ist ersichtlich, dass für jede Applikation 5 für eine bestimmte von der jeweiligen Applikation 5 entgegengenommene Steuerausgabe AA1 innerhalb des Containers 3 jeweils eine eigene Zuordnung einer jeweiligen Steuereingabe AB1 aufgelistet ist. Der Rechner 1 ermittelt daher im Rahmen der Abarbeitung des Containers 3 individuell für die jeweilige Applikation 5, von der die jeweilige Ausgabe stammt, die an das Betriebssystem 2 weiterzugebende Steuerausgabe AB1.

Nachfolgend werden - rein beispielhaft - einige mögliche Fälle erläutert, in denen eine für die Applikationen 5 bestimmte jeweilige Eingabe EB1, EB2 üblicherweise als Steuereingabe EB1 betrachtet wird. Die nachstehende Auflistung kann nach Bedarf ergänzt werden. Weiterhin schließen sich die aufgelisteten Beispiele nicht gegenseitig aus, sondern können auch kumulativ erfüllt sein.
- Der Anwender 6 gibt dem Rechner 1 über das Betriebssystem 2 einen Befehl zum Bewegen und Positionieren eines Cursors oder eines Mauszeigers auf einem Bildschirm der Ausgabeeinrichtung 7 vor. Beispiele derartiger Befehle sind ein direktes Bewegen einer Computermaus, das Berühren eines Touchscreens oder eines Mauspads, ein Klicken mit einer Maustaste, das Betätigen der Cursortasten einer üblichen Computertastatur und dergleichen mehr. Im Falle einer Gestenerkennung können auch die entsprechenden Gesten als derartige Befehle angesehen werden. Unter Umständen können auch ein Betätigen einer Tabulatortaste oder einer Enter-Taste derartige Befehle sein. Weiterhin können auch Tastenkombinationen derartige Befehle sein, beispielsweise ein Betätigen der Cursortasten, während gleichzeitig mindestens eine weitere Taste wie beispielsweise die Steuerungs- bzw. Kontrolltaste und/oder die Shift-Taste gedrückt ist.
- Der Anwender 6 gibt dem Rechner 1 über das Betriebssystem 2 einen Befehl zum Anzeigen von Schaltflächen vor. Ein Beispiel eines derartigen Befehls ist das Betätigen einer rechten Maustaste. Ein weiteres Beispiel ist das Anwählen eines Menüpunkts durch Klicken einer linken Maustaste, während sich der Mauszeiger im Bereich des jeweiligen Menüpunktes befindet.
- Der Anwender 6 gibt dem Rechner 1 über das Betriebssystem 2 einen Befehl zum Selektieren einer von auf dem Bildschirm der Ausgabeeinrichtung 7 dargestellten Schaltfläche vor. Beispiele derartige Befehle sind insbesondere ein Klicken einer linken Maustaste, während sich der Mauszeiger im Bereich der jeweiligen Schaltfläche befindet. Falls die Schaltfläche als default eingestellt ist, kann die Selektion beispielsweise auch durch Betätigen der Enter-Taste erfolgen.
- Der Anwender 6 gibt dem Rechner 1 über das Betriebssystem 2 eine Betätigung eines Softkeys vor, beispielsweise einer der üblicherweise auf Computertastaturen zu findenden Sondertasten F1 bis F12.
- Der Anwender 6 gibt dem Rechner 1 über das Betriebssystem 2 eine Betätigung eines Controlkeys (mit oder ohne gleichzeitiges Betätigen anderer Tasten der Tastatur) vor. Beispiele derartiger Betätigungen sind ein gleichzeitiges Drücken der Steuerungs- oder Control-Taste einerseits und einer Buchstabentaste der Tastatur, beispielsweise Control-P, Control-V, Control-C, Control-F usw.

Nachfolgend werden - rein beispielhaft - einige mögliche Fälle erläutert, in denen eine für die Applikationen 5 bestimmte Eingabe EB1, EB2 üblicherweise als Nutzeingabe EB2 betrachtet wird. Die nachstehende Auflistung kann nach Bedarf ergänzt werden. Weiterhin schließen sich die aufgelisteten Beispiele nicht gegenseitig aus, sondern können auch kumulativ erfüllt sein.
- Der Anwender 6 gibt dem Rechner 1 über das Betriebssystem 2 eine Information vor, die bei der Eingabe direkt in einem der jeweiligen Applikation 5 zugeordneten Fenster dargestellt wird. Beispiele derartiger Informationen sind die übliche Betätigung alphanumerischer Tasten wie der Tasten für die Buchstaben A-Z, die Buchstaben a-z, die Ziffern 0-9, die Satzzeichen und dergleichen mehr einer Computertastatur, sofern durch die jeweilige Betätigung auch das entsprechende alphanumerische Zeichen auf dem Bildschirm dargestellt wird. Ein weiteres Beispiel einer derartigen Eingabe ist das Zeichnen einer Linie in einem Zeichenprogramm.
- Als Nutzeingaben EB2 können weiterhin in der Regel Informationen angesehen werden, die - unabhängig davon, ob sie direkt und unmittelbar über die Ausgabeeinrichtung 7 ausgegeben werden - bei einem Beenden oder Verlassen der jeweiligen Applikation 5 in einem der jeweiligen Applikation 5 zugeordneten Datensatz 9 (siehe FIG 1) speicherbar sind. Beispiele derartiger Informationen sind insbesondere Formatierungsangaben, welche die Darstellung der Nutzdaten der Applikation 5 beeinflussen.
- Der Anwender 6 gibt dem Rechner 1 über das Betriebssystem 2 Daten zur Auswahl von von der jeweiligen Applikation 5 zu bearbeitenden Daten umfassen. Ein Beispiel derartiger Daten ist insbesondere ein Dateipfad, über den eine Nutzdatei der Applikation 5 in die Applikation 5 geladen wird.
- Der Anwender 6 gibt dem Rechner 1 über das Betriebssystem 2 alphanumerische Zeichen vor.

Nachfolgend werden - rein beispielhaft - einige mögliche Fälle erläutert, in denen eine jeweilige Ausgabe AA1, AA2 einer Applikation 5 üblicherweise als Steuerausgabe AA1 betrachtet wird. Die nachstehende Auflistung kann nach Bedarf ergänzt werden. Weiterhin schließen sich die aufgelisteten Beispiele nicht gegenseitig aus, sondern können auch kumulativ erfüllt sein.
- Eine Steuerausgabe AA1 kann insbesondere dann vorliegen, wenn das Layout von Darstellungen von Menüs und/oder Schaltflächen beeinflusst wird. Beispiele derartiger Einflüsse sind die Größe von Objekten in einem Menü, ob diese umrandet sind oder nicht, ob diese schattiert sind oder nicht und dergleichen mehr. Auch die dem Anwender 6 zur Verfügung gestellten Optionen von Menüs können hierunter fallen.
- Eine Steuerausgabe AA1 kann weiterhin dann vorliegen, wenn die Farbgebung von Fenstern (sei es des Fensters als Ganzes, sei es eines Teils des Fensters) beeinflusst werden soll. Beispielsweise fällt unter die Beeinflussung der Farbgebung eine Reaktion darauf, dass ein Mauszeiger über einen bestimmten Bereich eines Fensters bewegt wird. Hierunter fällt auch, mit welchen Symbolen Menüpunkte dargestellt werden.

Nachfolgend werden - rein beispielhaft - einige mögliche Fälle erläutert, in denen eine jeweilige Ausgabe AA1, AA2 einer Applikation 5 üblicherweise als Nutzausgabe AA2 betrachtet wird. Die nachstehende Auflistung kann nach Bedarf ergänzt werden. Weiterhin schließen sich die aufgelisteten Beispiele nicht gegenseitig aus, sondern können auch kumulativ erfüllt sein.
- Eine Nutzausgabe AA2 kann insbesondere dann vorliegen, wenn vom Anwender 6 vorgegebene Informationen über die Ausgabeeinrichtung 7 wieder an den Anwender 6 ausgegeben werden. Die typischen Beispiele derartiger Nutzausgaben AA2 wurden obenstehend bereits in Verbindung mit den typischen Beispiel von Nutzeingaben EB2 aufgeführt.
- Eine Nutzausgabe AA2 kann weiterhin dann vorliegen, wenn die Applikation 5 aus den vom Anwender 6 vorgegebenen Informationen andere Informationen ableitet. Ein typisches Beispiel ist eine von der jeweiligen Applikation 5 vorgenommene Auswertung.

In der Regel sind die Steuereingaben EB1 und die Nutzeingaben EB2 komplementär zueinander. Es reicht daher in der Regel aus, die Steuereingaben EB1 oder die Nutzeingaben EB2 so wie obenstehend erläutert zu definieren. Die jeweils andere Art von Eingaben EB2, EB1 ergibt sich in diesem Fall dadurch, dass die Steuereingaben EB1 und die Nutzeingaben EB2 komplementär zueinander sind. In analoger Weise sind in der Regel die Steuerausgaben AA1 und die Nutzausgaben AA2 komplementär zueinander. Es reicht daher in der Regel aus, die Steuerausgaben AA1 oder die Nutzausgaben AA2 so wie obenstehend erläutert zu definieren. Die jeweils andere Art von Ausgaben AA2, AA1 ergibt sich in diesem Fall dadurch, dass die Steuerausgaben AA1 und die Nutzausgaben AA2 komplementär zueinander sind.

Es ist möglich, dass die Liste oder Tabelle 8, welche die Zuordnung der vom Betriebssystem 2 stammenden Steuereingaben EB1 zu den an die Applikationen 5 weiterzugebenden Steuereingaben EA1 und die Zuordnung der von den Applikationen 5 stammenden Steuerausgaben AA1 zu den an das Betriebssystem 2 weiterzugebenden Steuerausgaben AB1 enthält, Bestandteil des Containers 3 als solchem ist. Vorzugsweise ist die Liste oder Tabelle 8 gemäß der Darstellung in FIG 1 jedoch eine eigenständige Liste oder Tabelle 8. Sie kann beispielsweise anhand von DLLs (DLL = dynamic link library) ermittelt werden, die den Applikationen 5 zugeordnet sind. Eine mögliche Ausgestaltung einer derartigen Realisierung wird nachfolgend in Verbindung mit FIG 7 näher erläutert.

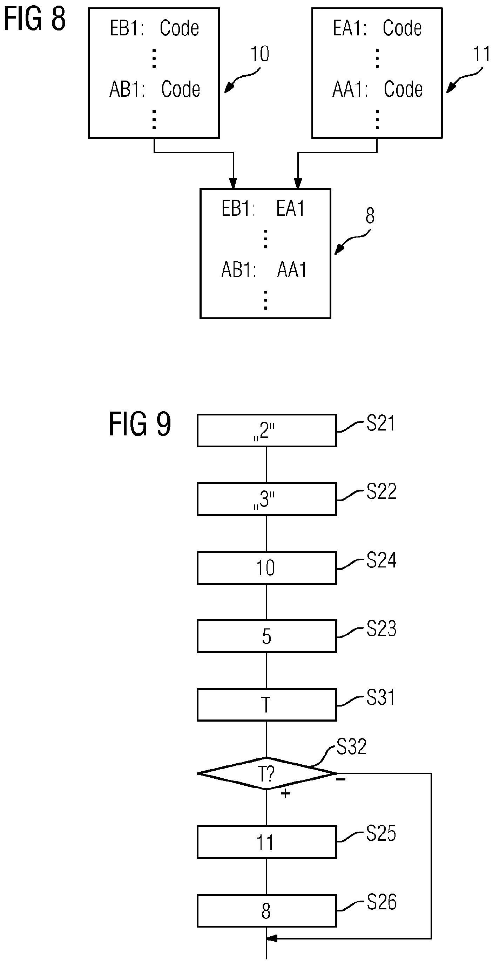

Gemäß FIG 7 wird bei Inbetriebnahme des Rechners 1 zunächst in einem Schritt S21 das Betriebssystem 2 gestartet. Zu einem späteren Zeitpunkt wird in einem Schritt S22 der Container 3 gestartet. Zu einem wiederum späteren Zeitpunkt wird in einem Schritt S23 mindestens eine Applikation 5 aufgerufen und in den Container 3 geladen. Vorzugsweise in Verbindung mit dem Starten des Containers 3, spätestens aber beim Aufrufen und Laden der soeben genannten Applikation 5 in den Container 3, lädt der Rechner 1 in einem Schritt S24 eine erste Liste 10 (siehe FIG 8) in den Container 3. Der Schritt S24 kann vom Rechner 1 im Rahmen der Abarbeitung des Betriebssystems 2 ausgeführt werden. Vorzugsweise erfolgt die Ausführung jedoch im Rahmen der Abarbeitung des Containers 3. Die erste Liste 10 enthält gemäß FIG 8 die vom Betriebssystem 2 an den Container 3 auszugebenden Steuereingaben EB1 und deren jeweils zugeordnete Funktionalität. Die erste Liste 10 enthält gemäß FIG 8 weiterhin die vom Container 3 an das Betriebssystem 2 auszugebenden Steuerausgaben AB1 und deren jeweils zugeordnete Funktionalität.

In Verbindung mit dem Aufrufen und Starten der Applikation 5 aus dem Container 3 heraus, d.h. insbesondere unmittelbar nach dem Aufrufen und Starten der Applikation 5, lädt der Rechner 1 weiterhin in einem Schritt S25 eine zweite Liste 11 (siehe ebenfalls FIG 8) in den Container 3. Die zweite Liste 11 enthält gemäß FIG 8 die vom Container 3 an die Applikation 5 weiterzugebenden Steuereingaben EA1 und deren jeweils zugeordnete Funktionalität. Die zweite Liste 11 enthält gemäß FIG 8 weiterhin die von der jeweiligen Applikation 5 an den Container 3 auszugebenden Steuerausgaben AA1 und deren jeweils zugeordnete Funktionalität. Es kann sich bei der zweiten Liste 11 insbesondere um eine der Applikation 5 zugeordnete DLL handeln.

Unter Verwendung der beiden Listen 10, 11 ermittelt der Rechner 1 in einem Schritt S26 im Rahmen der Abarbeitung des Containers 3 anhand der Funktionalitäten der ersten und der zweiten Liste 10, 11, welche der vom Betriebssystem 2 an den Container 3 auszugebenden Steuereingaben EB1 mit welchen vom Container 3 an die jeweilige Applikation 5 weiterzugebenden Steuereingaben EA1 korrespondieren. Weiterhin ermittelt der Rechner 1 im Schritt S26 im Rahmen der Abarbeitung des Containers 3 anhand der Funktionalitäten der ersten und der zweiten Liste 10, 11, welche der von der jeweiligen Applikation 5 an den Container 3 auszugebenden Steuerausgaben AA1 mit welchen vom Container 3 an das Betriebssystem 2 weiterzugebenden Steuerausgaben AB1 korrespondieren.

Die erfindungsgemäße Vorgehensweise wurde obenstehend in Verbindung mit einer Liste oder Tabelle 8 erläutert, bei welcher die Liste oder Tabelle 8 jeweils für jede einzelne Applikation 5 geführt wird. Es ist jedoch alternativ möglich, dass insbesondere die zweite Liste 11 einheitlich für mehrere Applikationen 5 eines jeweiligen Applikationstyps definiert ist. In diesem Fall wird die Vorgehensweise von FIG 7 geringfügig modifiziert. Insbesondere sind in diesem Fall - siehe FIG 9 - zusätzlich Schritte S31 und S32 vorhanden. Im Schritt S31 teilt die soeben geladene Applikation 5 dem Container 3 ihren Applikationstyp T mit. Im Schritt S32 prüft der Rechner 1, ob dem Container 3 der entsprechende Applikationstyp T bereits bekannt ist. Wenn der entsprechende Applikationstyp T dem Container 3 bereits bekannt ist, ist auch die zugehörige Liste oder Tabelle 8 bereits erstellt. In diesem Fall können die Schritte S25 und S26 übersprungen werden. Anderenfalls werden die Schritte S25 und S26 ausgeführt.

Die vorliegende Erfindung weist viele Vorteile auf. Insbesondere ist es auf einfache Weise möglich, eine Vielzahl von Applikationen 5, die zu unterschiedlichen Zeitpunkten entwickelt wurden, derart miteinander zu kombinieren, dass sich für alle Applikationen 5 ein einheitliches look and feel ergibt. Der Container 3 kann - zur Umsetzung der Steuereingaben EB1, EA1 ineinander und zur Umsetzung der Steuerausgaben AA1, AB1 ineinander - eine Vielzahl von Technologien laden und zur Laufzeit integrieren. Die Vorgehensweise kann dynamisch und konfigurierbar sein. Die Technologie, welche von einer jeweiligen Applikation 5 zur Realisierung der Benutzerschnittstelle verwendet wird, kann vom Container 3 beim Laden der jeweiligen Applikation 5 automatisch erkannt werden. Der Container 3 kann sich beim Laden der jeweiligen Applikation 5 automatisch entsprechend anpassen.

Für den Anwender 6 ist der Container 3 in der Regel nicht als solcher erkennbar. Er hat vielmehr den Eindruck, als ob die Applikation 5 sich so verhält, wie ihm der Container 3 dies vorspiegelt. Der Container 3 wirkt somit als Proxy für die Applikationen 5. Er plaziert sie also in ein übergreifendes Benutzerschnittstellen-Layout, das vom Anwender 6 als das Layout der Applikationen 5 wahrgenommen wird. Innerhalb der Applikationen 5 ist hingegen keinerlei Technologieintegration mehr erforderlich. Sie ist zwar möglich, wird jedoch kompatibel mit der Integration in den Container 3 sein.

Es ist weiterhin möglich, dass der Container 3 die Listen 10, 11 im laufenden Betrieb aktualisiert, beispielsweise durch Zugreifen auf in einer Cloud gespeicherte Daten und Services.

Durch die erfindungsgemäße Vorgehensweise wird es dem Entwickler einer Applikation 5 ermöglicht, sich auf eine Technologie zu konzentrieren, die er kennt, und nur diese für neue Eigenschaften einer Applikation 5 zu verwenden. Erforderliche Umsetzungen von einer Schnittstellentechnologie in eine andere Schnittstellentechnologie werden automatisiert und im Hintergrund vom Container 3 vorgenommen.

Zusammengefasst betrifft die vorliegende Erfindung somit folgenden Sachverhalt:
Ein Rechner 1 führt unter Kontrolle und Steuerung durch ein Betriebssystem 2 einen Container 3 aus, unter dessen Kontrolle und Steuerung der Rechner 1 eine Anzahl von Applikationen 5 ausführt. Er nimmt im Rahmen der Abarbeitung des Betriebssystems 2 von einem Anwender 6 Eingaben EB1, EB2 entgegen, die für eine jeweilige der Applikationen 5 bestimmt sind, und gibt sie an den Container 3 weiter. Der Rechner 1 prüft im Rahmen der Abarbeitung des Containers 3, ob es sich um eine Nutzeingabe EB2 oder eine Steuereingabe EB1 handelt. Nutzeingaben EB2 gibt der Rechner 1 im Rahmen der Abarbeitung des Containers 3 an die jeweilige Applikation 5 weiter. Für Steuereingaben EB1 ermittelt der Rechner 1 jeweils eine an die jeweilige Applikation 5 weiterzugebende Steuereingabe EA1 und gibt sie an die jeweilige Applikation 5 weiter. Der Rechner 1 nimmt weiterhin von den Applikationen 5 Ausgaben AA1, AA2 entgegen. Der Rechner 1 prüft im Rahmen der Abarbeitung des Containers 3, ob es sich um eine Nutzausgabe AA2 oder eine Steuerausgabe AA1 handelt. Nutzausgaben AA2 gibt der Rechner 1 im Rahmen der Abarbeitung des Containers 3 an das Betriebssystem 2 weiter. Für Steuerausgaben AA1 ermittelt der Rechner 1 jeweils eine an das Betriebssystem 2 weiterzugebende Steuerausgabe AB1 und gibt sie an das Betriebssystem 2 weiter.

Der Rechner 1 gibt die Ausgaben AB1, AB2 an den Anwender 6 aus.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Rechner
- 2: Betriebssystem
- 3: Container
- 4: Maschinencode
- 5: Applikationen
- 6: Anwender
- 7: Ausgabeeinrichtung
- 8: Liste oder Tabelle
- 9: Datensätze
- 10: erste Liste
- 11: zweite Liste
- AA1: Steuerausgabe von Applikation
- AA2: Nutzausgabe von Applikation
- AB1: Steuerausgabe an Betriebssystem
- AB2: Nutzausgabe an Betriebssystem
- EA1: Steuereingabe an Applikation
- EA2: Nutzeingabe an Applikation
- EB1: Steuereingabe von Betriebssystem für Applikation
- EB2: Nutzeingabe von Betriebssystem für Applikation
- EB3: Eingabe von Betriebssystem an Container
- S1 bis S32: Schritte
- T: Applikationstyp

## Patentansprüche

1. Betriebsverfahren für einen Rechner (1),
a) wobei der Rechner (1) unter Kontrolle und Steuerung durch ein Betriebssystem (2) einen Container (3) ausführt,
b) wobei der Rechner (1) unter Kontrolle und Steuerung durch den Container (3) eine Anzahl von Applikationen (5) ausführt,
c) wobei der Rechner (1) im Rahmen der Abarbeitung des Betriebssystems (2) von einem Anwender (6) Eingaben (EB1, EB2) entgegennimmt, die für eine jeweilige der Applikationen (5) bestimmt sind, und an den Anwender (6) Ausgaben (AB1, AB2) ausgibt, die von einer jeweiligen der Applikationen (5) herrühren,
d) wobei der Rechner (1) im Rahmen der Abarbeitung des Betriebssystems (2) die für jeweilige Applikation (5) bestimmte jeweilige Eingabe (EB1, EB2) zunächst an den Container (3) weitergibt,
e) wobei der Rechner (1) im Rahmen der Abarbeitung des Containers (3) prüft, ob die jeweilige Eingabe (EB1, EB2) eine Nutzeingabe (EB2) für die jeweilige Applikation (5) oder eine Steuereingabe (EB1) für die jeweilige Applikation (5) ist,
f) wobei der Rechner (1) in dem Fall, dass es sich bei der jeweiligen Eingabe (EB1, EB2) um eine Nutzeingabe (EB2) für die jeweilige Applikation (5) handelt, die jeweilige Eingabe (EB2) im Rahmen der Abarbeitung des Containers (3) an die jeweilige Applikation (5) weitergibt,
g) wobei der Rechner (1) in dem Fall, dass es sich bei der jeweiligen Eingabe (EB1, EB2) um eine Steuereingabe (EB1) für die jeweilige Applikation (5) handelt, anhand der vom Betriebsystem (2) entgegengenommenen Steuereingabe (EB1) eine an die jeweilige Applikation (5) weiterzugebende Steuereingabe (EA1) ermittelt und diese Steuereingabe (EA1) an die jeweilige Applikation (5) weitergibt,
h) wobei der Rechner (1) im Rahmen der Abarbeitung des Containers (3) prüft, ob eine jeweilige Ausgabe (AA1, AA2) einer jeweiligen Applikation (5) eine Nutzausgabe (AA2) oder eine Steuerausgabe (AA1) der jeweiligen Applikation (5) ist,
i) wobei der Rechner (1) in dem Fall, dass es sich bei der jeweiligen Ausgabe (AA1, AA2) um eine Nutzausgabe (AA2) der jeweiligen Applikation (5) handelt, die jeweilige Ausgabe (AA2) im Rahmen der Abarbeitung des Containers (3) an das Betriebssystem (2) weitergibt,
j) wobei der Rechner (1) in dem Fall, dass es sich bei der jeweiligen Ausgabe (AA1, AA2) um eine Steuerausgabe (AA1) der jeweiligen Applikation (5) handelt, anhand der von der jeweiligen Applikation (5) entgegengenommenen Steuerausgabe (AA1) eine an das Betriebssystem (2) weiterzugebende Steuerausgabe (AB1) ermittelt und diese Steuerausgabe (AB1) an das Betriebssystem (2) weitergibt,
k) wobei der Rechner (1) spätestens beim Aufrufen und Laden einer zuerst geladenen Applikation (5) in den Container (3) eine erste Liste (10) lädt, welche die vom Betriebssystem (2) an den Container (3) auszugebenden Steuereingaben (EB1) und deren jeweils zugeordnete Funktionalität und die vom Container (3) an das Betriebssystem (2) auszugebenden Steuerausgaben (AB1) und deren jeweils zugeordnete Funktionalität enthält,
l) wobei der Rechner (1) spätestens beim Aufruf einer jeweiligen Applikation (5) aus dem Container (3) heraus in den Container (3) eine zweite Liste (11) lädt, welche die vom Container (3) an die jeweilige Applikation (5) weiterzugebenden Steuereingaben (EA1) und deren jeweils zugeordnete Funktionalität und die von der jeweiligen Applikation (5) an den Container (3) auszugebenden Steuerausgaben (AA1) und deren jeweils zugeordnete Funktionalität enthält,
m) wobei der Rechner (1) anhand der Funktionalitäten der ersten und der zweiten Liste (10, 11) eine weitere Liste oder Tabelle (8) ermittelt, in der enthalten ist, welche der vom Betriebssystem (2) an den Container (3) auszugebenden Steuereingaben (EB1) mit welchen vom Container (3) an die jeweilige Applikation (5) weiterzugebenden Steuereingaben (EA1) korrespondieren und welche der von der jeweiligen Applikation (5) an den Container (3) auszugebenden Steuerausgaben (AA1) mit welchen vom Container (3) an das Betriebssystem (2) weiterzugebenden Steuerausgaben (AB1) korrespondieren, und
n) wobei der Rechner (1) zum Ermitteln einer an die jeweilige Applikation (5) weiterzugebenden Steuereingabe (EA1) und zum Ermitteln einer an das Betriebssystem (2) weiterzugebenden Steuerausgabe (AB1) auf die weitere Liste oder Tabelle (8) zugreift.

2. Betriebsverfahren nach Anspruch 1,
**dadurch gekennzeichnet ,**
**dass** die Anzahl an Applikationen (5) größer als eins ist.

3. Betriebsverfahren nach Anspruch 2,
**dadurch gekennzeichnet ,**
a) **dass** der Rechner (1) in dem Fall, dass es sich bei der jeweiligen Eingabe (EB1, EB2) um eine vom Betriebssystem (2) entgegengenommene Steuereingabe (EB1) handelt, im Rahmen der Abarbeitung des Containers (3) individuell für die jeweilige Applikation (5), für welche die jeweilige Eingabe (EB1) bestimmt ist, die an die jeweilige Applikation (5) weiterzugebende Steuereingabe (EA1) ermittelt und
b) **dass** der Rechner (5) in dem Fall, dass es sich bei der jeweiligen Ausgabe (AA1, AA2) um eine von der jeweiligen Applikation (5) entgegengenommene Steuerausgabe (AA1) handelt, im Rahmen der Abarbeitung des Containers (3) individuell für die jeweilige Applikation (5), von der die jeweilige Ausgabe (AA1) stammt, die an das Betriebssystem (2) weiterzugebende Steuerausgabe (AB1) ermittelt.

4. Betriebsverfahren nach Anspruch 1, 2 oder 3,
**dadurch gekennzeichnet ,**
**dass** der Rechner (1) im Rahmen der Abarbeitung des Containers (3) anhand mindestens eines der nachstehenden Kriterien zwischen Steuereingaben (EB1), Nutzeingaben (EB2), Steuerausgaben (AA1) und Nutzausgaben (AA2) unterscheidet:
a) die für die Applikationen (5) bestimmten Nutzeingaben (EB2) umfassen vom Anwender (6) vorgegebene Informationen, die bei der Eingabe direkt in einem der jeweiligen Applikation (5) zugeordneten Fenster dargestellt werden und/ oder bei einem Beenden oder Verlassen der jeweiligen Applikation (5) in einem der jeweiligen Applikation (5) zugeordneten Datensatz (9) speicherbar sind, und/oder vom Anwender (6) vorgegebene Daten zur Auswahl von von der jeweiligen Applikation (5) zu bearbeitenden Daten und/oder alphanumerische Zeichen,
b) die für die Applikationen (5) bestimmten Steuereingaben (EB1) umfassen Befehle zum Bewegen und Positionieren eines Cursors und/oder eines Mauszeigers auf einem Bildschirm und/oder Befehle zum Anzeigen von Schaltflächen und/oder Befehle zum Selektieren von auf dem Bildschirm dargestellten Schaltflächen und/oder Betätigungen von Softkeys und/ oder Betätigungen von Controlkeys,
c) die Nutzausgaben (AA2) der Applikationen (5) umfassen die Wiedergabe von vom Anwender (6) vorgegebenen Informationen und/oder von daraus abgeleiteten Informationen und
d) die Steuerausgaben (AA1) der Applikationen (5) umfassen das Layout von Darstellungen von Menüs und/oder Schaltflächen und/oder eine Farbgebung von Fenstern der Applikation (5).

5. Betriebsverfahren nach einem der obigen Ansprüche,
**dadurch gekennzeichnet ,**
**dass** die zweite Liste (11) einheitlich für mehrere Applikationen (5) eines jeweiligen Applikationstyps (T) definiert ist und dass die Applikation (5) dem Container (3) ihren Applikationstyp (T) mitteilt.

6. Betriebsverfahren nach einem der obigen Ansprüche,
**dadurch gekennzeichnet ,**
**dass** der Container (3) transparent ausgeführt wird.

7. Betriebsverfahren nach einem der obigen Ansprüche,
**dadurch gekennzeichnet ,**
**dass** der Container (3) unabhängig von den Applikationen (5) lauffähig ist.

8. Container, der Maschinencode (4) umfasst, der von einem Rechner (1) abarbeitbar ist, wobei die Abarbeitung des Maschinencodes (4) durch den Rechner (1) bewirkt, dass der Rechner (1) ein Betriebsverfahren zumindest mit den Merkmalen b) bis j) des Anspruchs 1 ausführt.

9. Container nach Anspruch 8,
**dadurch gekennzeichnet ,**
**dass** die Abarbeitung des Maschinencodes (4) durch den Rechner (1) bewirkt, dass der Rechner (1) ein Betriebsverfahren mit den Merkmalen mindestens eines der Ansprüche 2 bis 7 ausführt.

10. Rechner, der mit einem Betriebssystem (2) und einem Container (3) nach Anspruch 8 programmiert ist, so dass der Rechner bei Aufruf des Containers (3) ein Betriebsverfahren mit den Merkmalen a) bis m) des Anspruchs 1 ausführt.

11. Rechner nach Anspruch 10,
**dadurch gekennzeichnet ,**
**dass** die Abarbeitung des Maschinencodes (4) durch den Rechner bewirkt, dass der Rechner ein Betriebsverfahren mit den Merkmalen mindestens eines der Ansprüche 2 bis 7 ausführt.

## Claims

1. Operating method for a computer (1),
a) wherein the computer (1) executes a container (3) under control and management by an operating system (2)
b) wherein the computer (1) executes a number of applications (5) under control and management by the container (3),
c) wherein as part of the processing of the operating system (2) the computer (1) receives inputs (EB1, EB2) from a user (6) which are intended for one of the respective applications (5) and outputs outputs (AB1, AB2) to the user (6) which originate from one of the respective applications (5),
d) wherein as part of the processing of the operating system (2) the computer (1) forwards the respective input (EB1, EB2) intended for the respective application (5) firstly to the container (3),
e) wherein as part of the processing of the container (3) the computer (1) checks whether the respective input (EB1, EB2) is a user input (EB2) for the respective application (5) or a control input (EB1) for the respective application (5),
f) wherein in the event that the respective input (EB1, EB2) is a user input (EB2) for the respective application (5), the computer (1) forwards the respective input (EB2) to the respective application (5) as part of the processing of the container (3),
g) wherein in the event that the respective input (EB1, EB2) is a control input (EB1) for the respective application (5), the computer (1) determines a control input (EA1) to be forwarded to the respective application (5) based on the control input (EB1) received by the operating system (2) and forwards this control input (EA1) to the respective application (5),
h) wherein as part of the processing of the container (3) the computer (1) checks whether a respective output (AA1, AA2) of a respective application (5) is a user output (AA2) or a control output (AA1) of the respective application (5),
i) wherein in the event that the respective output (AA1, AA2) is a user output (AA2) of the respective application (5), the computer (1) forwards the respective output (AA2) to the operating system (2) as part of the processing of the container (3),
j) wherein in the event that the respective output (AA1, AA2) is a control output (AA1) of the respective application (5), the computer (1) determines a control output (AB1) to be forwarded to the operating system (2) and forwards this control output (AB1) to the operating system (2)based on the control output (AA1) received by the respective application (5),
k) wherein the computer (1) loads a first list (10) no later than when an application (5) loaded first in the container (3) is called and loaded, which contains the control inputs (EB1) to be output by the operating system (2) to the container (3) and the functionality respectively associated therewith and the control outputs (AB1) to be output by the container (3) to the operating system (2) and the functionality respectively associated therewith,
l) wherein the computer (1) loads a second list (11) no later than when a respective application (5) is called from the container (3) into the container (3), which contains the control inputs (EA1) to be forwarded by the container (3) to the respective application (5) and the functionality respectively associated therewith and the control outputs (AA1) to be output by the respective application (5) to the container (3) and the functionality respectively associated therewith,
m) wherein the computer (1) determines a further list or table (8) based on the functionalities of the first and the second list (10, 11), which contain the control inputs (EB1) to be output by the operating system (2) to the container (3) which correspond to the control inputs (EA1) to be forwarded by the container (3) to the respective application (5) and which contain the control outputs (AA1) to be output by the respective application (5) to the container (3) which correspond to the control outputs (AB1) to be forwarded by the container (3) to the operating system (2), and
n) wherein the computer (1) accesses the further list or table (8) in order to determine a control input (EA1) to be forwarded to the respective application (5) and to determine a control output (AB1) to be forwarded to the operating system (2).

2. Operating method according to claim 1,
**characterised in that**
the number of applications (5) is greater than one.

3. Operating method according to claim 2,
**characterised in that**,
a) in the event that the respective input (EB1, EB2) is a control input (EB1) received by the operating system (2), the computer (1) determines the control input (EA1) to be forwarded to the respective application (5) as part of the processing of the container (3) individually for the respective application (5) for which the respective input (EB1) is intended, and
b) in the event that the respective output (AA1, AA2) is a control output (AA1) received by the respective application (5), the computer (5) determines the control output (AB1) to be forwarded to the operating system (2) as part of the processing of the container (3) individually for the respective application (5) from which the respective output (AA1) originates.

4. Operating method according to claim 1, 2 or 3,
**characterised in that**
as part of the processing of the container (3), the computer differentiates between control inputs (EB1), user inputs (EB2), control outputs (AA1) and user outputs (AA2) based on at least one of the following criteria:
a) the user inputs (EB2) intended for the applications (5) comprise information specified by the user (6) which is displayed in a window assigned to the respective application (5) directly on input and/or which can be stored in a dataset (9) assigned to the respective application (5) when the respective application (5) is terminated or exited, and/or data specified by the user (6) for selection from data and/or alphanumeric characters to be processed by the respective application (5),
b) the control inputs (EB1) intended for the applications (5) comprise commands for moving and positioning a cursor and/or a mouse pointer on a screen and or commands for displaying buttons and/or commands for selecting buttons displayed on the screen and/or actuations of softkeys and/or actuations of control keys,
c) the user outputs (AA2) of the applications (5) comprise the playback of information specified by the user (6) and/or information derived therefrom and
d) the control outputs (AA1) of the applications (5) comprise the layout of menu and/or button displays and/or a colour scheme of application windows (5).

5. Operating method according to one of the above claims,
**characterised in that**
the second list (11) is uniformly defined for a plurality of applications (5) of a respective type of application (T) and that the application (5) imparts its type of application (T) to the container (3).

6. Operating method according to one of the above claims,
**characterised in that**
the container (3) is executed transparently.

7. Operating method according to one of the above claims,
**characterised in that**
the container (3) can run independently of the applications (5).

8. Container which comprises machine code (4) which can be processed by a computer (1), wherein the processing of the machine code (4) by the computer (1) causes the computer (1) to execute an operating method at least with the features b) to j) of claim 1.

9. Container according to claim 8,
**characterised in that**
the processing of the machine code (4) by the computer (1) causes the computer (1) to execute an operating method with the features of at least one of claims 2 to 7.

10. Computer which is programmed with an operating system (2) and a container (3) according to claim 8, in order that the computer executes an operating method with the features a) to m) of claim 1 when the container (3) is called.

11. Computer according to claim 10,
**characterised in that**
the processing of the machine code (4) by the computer causes the computer to execute an operating method with the features of at least one of claims 2 to 7.

## Revendications

1. Procédé pour faire fonctionner un ordinateur (1),
a) dans lequel l'ordinateur (1) réalise un conteneur (3) sous le contrôle et la commande par un système (2) de fonctionnement,
b) dans lequel l'ordinateur (1) exécute un nombre d'applications (5) sous le contrôle et la commande par le conteneur (3),
c) dans lequel l'ordinateur (1) reçoit, dans le cadre de l'élaboration du système (2) de fonctionnement d'un utilisateur (6), des entrées (EB1, EB2) qui sont destinées à l'une respective des applications (5) et envoient à l'utilisateur (6) des sorties (AB1, AB2) qui proviennent de l'une respective des applications (5),
d) dans lequel l'ordinateur (1) achemine, dans le cadre de l'élaboration du système (2) de fonctionnement, d'abord au conteneur (3) des entrées (EB1, EB2) respectives destinées à une application (5) respective,
e) dans lequel l'ordinateur (1) contrôle, dans le cadre de l'élaboration du conteneur (3), si l'entrée (EB1, EB2) respective est une entrée (EB2) utile pour l'application (5) respective ou une entrée (EB1) de commande pour l'application (5) respective,
f) dans lequel l'ordinateur (1) achemine, dans le cas où l'entrée (EB1, EB2) respective est une entrée (EB2) utile pour l'application (5) respective, l'entrée (EB2) respective, dans le cadre de l'élaboration du conteneur (3), à l'application (5) respective,
g) dans lequel l'ordinateur (1) détermine, dans le cas où l'entrée (EB1, EB2) respective est une entrée (EB1) de commande pour l'application (5) respective, à l'aide de l'entrée (EB1) de commande reçue du système (2) de fonctionnement, une entrée (EA1) de commande à acheminer à l'application (5) respective et achemine cette entrée (EB1) de commande à l'application (5) respective,
h) dans lequel l'ordinateur (1) contrôle, dans le cadre de l'élaboration du conteneur (3), si une sortie (AA1, AA2) respective d'une application (5) respective est une sortie (AA2) utile ou une sortie (AA1) de commande de l'application (5) respective,
i) dans lequel l'ordinateur (1) achemine, dans le cas où la sortie (AA1, AA2) est une sortie (AA2) utile de l'application (5) respective, la sortie (AA2) respective dans le cadre de l'élaboration du conteneur (3), au système (2) de fonctionnement,
j) dans lequel l'ordinateur (1) détermine, dans le cas où la sortie (AA1, AA2) respective est une sortie (AA1) de commande de l'application (5) respective, à l'aide de la sortie (AA1) de commande reçue de l'application (5) respective, une sortie (AB1) de commande à acheminer au système (2) de fonctionnement et achemine cette sortie (AB1) de commande au système (2) de fonctionnement,
k) dans lequel l'ordinateur (1), au plus tard lors de l'appel et de la charge d'une application (5) chargée d'abord, charge dans le conteneur (3) une première liste (10) qui contient les entrées (EB1) de commande à transmettre du système (1) de fonctionnement au conteneur (3) et leur fonctionnalité respective associée, et les sorties (AB1) de commande à transmettre du conteneur (3) au système (2) de fonctionnement et leur fonctionnalité respective associée,
l) dans lequel l'ordinateur (1), au plus tard lors de l'appel d'une application (5) respective du conteneur (3), charge dans le conteneur (3) une deuxième liste (11) qui contient les entrées (EA1) de commande à acheminer du conteneur (3) à l'application (5) respective et leur fonctionnalité respective associée et les sorties (AA1) de commande à acheminer de l'application (5) respective au conteneur (3) et leur fonctionnalité respective associée,
m) dans lequel l'ordinateur (1) détermine, à l'aide des fonctionnalités de la première et de la deuxième liste (10, 11) une autre liste ou table (8) dans laquelle sont contenues celles des entrées (EB1) de commande à acheminer du système (2) de fonctionnement au conteneur (3) qui correspondent à celles des entrées (EA1) de commande à acheminer du conteneur (3) à l'application (5) respective, et celles des sorties (AA1) de commande à acheminer de l'application (5) respective au conteneur (3), qui correspondent à celles des sorties (AB1) de commande à acheminer du conteneur (3) au système (2) de fonctionnement, et
n) dans lequel l'ordinateur (1) accède, pour la détermination d'une entrée (EA1) de commande à acheminer à l'application (5) respective et pour la détermination d'une sortie (AB1) de commande à acheminer au système (2) de fonctionnement, à l'autre liste ou table (8).

2. Procédé pour faire fonctionner suivant la revendication 1, car a c t é r i s é en ce que
le nombre des applications (5) est plus grand que 1.

3. Procédé pour faire fonctionner suivant la revendication 2, car a c t é r i s é en ce que
a) l'ordinateur (1) détermine, dans le cas où l'entrée (EB1, EB2) respective est une entrée (EB1) de commande reçue du système (2) de fonctionnement, dans le cadre de l'élaboration du conteneur (3), individuellement pour l'application (5) respective pour laquelle l'entrée (EB1) respective est déterminée, l'entrée (EA1) de commande à acheminer à l'application (5) respective, et
b) l'ordinateur (1) détermine, dans le cas où la sortie (AA1, AA2) respective est une sortie (AA1) de commande reçue de l'application (5) respective dans le cadre de l'élaboration du conteneur (3), individuellement pour l'application (5) respective dont est issue la sortie (AA1) respective, la sortie (AB1) de commande à acheminer au système (2) de fonctionnement.

4. Procédé pour faire fonctionner suivant les revendications 1, 2 ou 3,
**caractérisé en ce que**
l'ordinateur (1) distingue dans le cadre de l'élaboration du conteneur (3), à l'aide d'au moins un des critères suivants entre des entrées (EB1) de commande, des entrées (EB2) utiles, des sorties (AA1) de commande et des sorties (AA2) utiles :
a) les entrées (EB2) utiles destinées aux applications (5) comprennent des informations données à l'avance par l'utilisateur (6), qui lors de l'entrée sont représentées directement dans une fenêtre associée à l'application (5) respective et/ou lorsque l'on met fin ou lorsque l'on quitte l'application (5) respective, peuvent être mises en mémoire dans un ensemble (9) de données associées à l'application (5) respective et/ou des données données à l'avance par l'utilisateur (6) pour la sélection de données et/ou de signes alphanumériques à traiter par l'application (5) respective,
b) les entrées (EB1) de commande destinées aux applications (5) comprennent des instructions de déplacement et de mise en position d'un curseur et/ou d'une souris sur un écran et/ou des instructions d'affichage de boutons et/ou des instructions de sélection de boutons représentées sur l'écran et/ou des actionnements de Softkeys et/ou des actionnements de Controlkeys,
c) les sorties (AA2) utiles des applications (5) comprennent l'acheminement d'informations données à l'avance par l'utilisateur (6) et/ou des informations qui s'en déduisent, et
d) les sorties (AA1) de commande des applications (5) comprennent le Layout de représentations de menu et/ou des boutons et/ou un coloris de fenêtre de l'application (5).

5. Procédé pur faire fonctionner suivant l'une des revendications précédentes,
**caractérisé en ce que**
la deuxième liste (11) est définie de manière unitaire pour plusieurs applications (5) d'un type (T) d'application respectif et **en ce que** l'application (5) fait part au conteneur (3) de son type (T) d'application.

6. Procédé pour faire fonctionner suivant l'une des revendications précédentes,
**caractérisé en ce que**
le conteneur (3) est réalisé de manière transparente.

7. Procédé pour faire fonctionner suivant l'une des revendications précédentes,
**caractérisé en ce que**
le conteneur (3) est opérationnel indépendamment des applications (5).

8. Conteneur qui comprend un code machine (4) qui peut être élaboré par un ordinateur (1), dans lequel l'élaboration du code machine (4) par l'ordinateur (1) fait que l'ordinateur (1) exécute un procédé de fonctionnement ayant au moins les caractéristiques b) à j) de la revendication 1.

9. Conteneur suivant la revendication 8,
**caractérisé en ce que**
l'élaboration du code machine (4) par l'ordinateur (1) fait que l'ordinateur (1) exécute un procédé de fonctionnement ayant les caractéristiques d'au moins l'une des revendications 2 à 7.

10. Ordinateur qui est programmé par un système (2) de fonctionnement et un conteneur (3) suivant la revendication 8, de manière à ce que l'ordinateur exécute, lors de l'appel du conteneur (3), un procédé de fonctionnement ayant les caractéristiques a) à m) de la revendication 1.

11. Ordinateur suivant la revendication 10,
**caractérisé en ce que**
l'élaboration du code machine (4) par l'ordinateur fait que l'ordinateur exécute un procédé de fonctionnement ayant les caractéristiques d'au moins l'une des revendications 2 à 7.
